(19) Europäisches Patentamt
European Patent Office
Office européen des brevets

(11) Publication number: 0 526 797 A1

(12) EUROPEAN PATENT APPLICATION

(21) Application number: 92112453.3

(51) Int. Cl.5: C08J 3/12, C08L 27/12

(22) Date of filing: 21.07.92

(30) Priority: 07.08.91 JP 222302/91
04.10.91 JP 283846/91

(43) Date of publication of application:
10.02.93 Bulletin 93/06

(84) Designated Contracting States:
DE FR GB IT SE

(71) Applicant: JAPAN GORE-TEX, INC.
42-5, 1-chome Akazutsumi
Setagaya-ku Tokyo 156(JP)

(72) Inventor: Ohashi, Kazuhiko
13-22, Sakuragaoka-Nishi 4-Chome,
Sanyo-Cho
Akaiwa-Gun, Okayama-Ken 709-08(JP)
Inventor: Moriya, Akira
312-66, Yamazaki
Okayama-Shi, Okayama-Ken 703(JP)
Inventor: Fukutake, Sunao
356-1, Nagaoka
Okayama-Shi, Okayama-Ken 703(JP)

(74) Representative: Kador & Partner
Corneliusstrasse 15
W-8000 München 5(DE)

# (54) Hydrophilic fluoropolymer particles and products thereof.

(57) The present invention provides hydrophilic fluoropolymer particles whose surfaces are coated with a hydrophilic fluorine-containing compound that provides durable hydrophilic properties to the particles; and further provides hydrophilic fluoropolymer particles with metallic coatings.

EP 0 526 797 A1

## FIELD OF THE INVENTION

This invention relates to fluoropolymer particles whose surfaces are coated with hydrophilic materials.

## BACKGROUND OF THE INVENTION

Fluoropolymer powders have numerous outstanding characteristics, such as water repellency, chemical stability, thermal stability, low-friction, weatherproofness, and the like, which are put to use in a wide variety of fields. Well-known fluoropolymers available in powder form include polytetrafluoroethylene (PTFE), ethylene-tetrafluoroethylene copolymers (ETFE), tetrafluoroethylene-hexafluoropropylene copolymers (FEP), ethylene-trifluorochloroethylene copolymers (ECTFE), polyvinylidene fluoride (PVDF), tetrafluoroethylene-perfluoroalkyl vinyl ether copolymers (PFA), and the like.

In many instances use of the fluoropolymer powders is accomplished by first dispersing them in liquids. For reasons relating to health, safety, and environmental concerns users find it has become increasingly desirable to disperse the fluoropolymer powders in water or other aqueous systems, instead of the organic solvents customarily used. However, the fluoropolymer powder particles are very hydrophobic, i.e., they are not wetted by water, and consequently are very difficult to disperse in aqueous systems.

When surfactants are used to disperse fluoropolymer powders in aqueous systems they are required in such large quantities, often several percent or more, that they themselves become a problem. Use of large quantities of surfactants may contaminate the dispersion solution, thus limiting the scope of its application, or may promote extensive foaming which, in turn, can cause severe problems. For example, large quantities of surfactants in a metal-plating solution, required to wet and disperse fluoropolymer powder, create such severe problems that the process is impractical.

Coating the surface of fluoropolymer powder with thermosetting polymer resin, metal, ceramic, or mixture thereof, are methods that have been used to make the fluoropolymer powder hydrophilic. Such coating treatments have indeed made the fluoropolymer powder surface hydrophilic and have improved the wetting characteristics of the powder, however, the coatings adversely affect the desirable intrinsic properties of the fluoropolymer powder. For example, when the surface of a powder is coated with a thermosetting polymer resin, chemical stability, weatherability, and other desirable properties of the fluoropolymer are sacrificed. When the surface of a fluoropolymer powder is coated with a metal, the chemical stability and low friction properties are impaired. When the surface of a fluoropolymer powder is coated with a ceramic, the curing temperature of the ceramic must be limited to 300°C or less which prevents making full use of the ceramic's characteristics and considerably reduces the chemical stability of the surface.

## SUMMARY OF THE INVENTION

The present invention provides hydrophilic fluoropolymer powder particles without sacrificing chemical stability, thermal stability, weatherability, and wear properties of the fluoropolymer particles; and further provides hydrophilic fluoropolymer particles having metallic coatings on their surfaces.

The hydrophilic fluoropolymer particles are spontaneously wetted by water and other aqueous liquids, thus providing, without use of substitutional liquids, large amounts of surfactants, or other special treatments, quick easy wetting of the particles and intimate contact of the liquids with the particle surfaces thus enabling good foam-free dispersion of the particles in aqueous systems.

Specifically, the hydrophilic particles of the invention comprise fluoropolymer particles having on at least a portion of their surfaces a hydrophilic coating of a hydrophilic fluorine-containing copolymer comprising (i) units of a fluorine-containing monomer and (ii) units of a non-fluorinated vinyl monomer containing a hydrophilic functional group; wherein the amount of the copolymer present is sufficient to impart increased hydrophilicity to the fluoropolymer particles.

Preferably, the fluorine content of the hydrophilic fluorine-containing copolymer is between 2 and 60 percent by weight of the copolymer. Preferably, also, the ratio of the formula weight of the recurring units of the copolymers to the number of functional group units in the formula is between 45 and 700.

In another embodiment of the invention the hydrophilic coating is a fluorine-containing surfactant comprising a perfluoro higher alkyl group with a carbon number of eight or more.

Yet another embodiment of the invention provides a metallic coating on the hydrophilic coating on the surface of the fluoropolymer particles.

## DESCRIPTION OF THE INVENTION

The kind of fluoropolymer resin used to make the fluoropolymer particles is not restricted and a variety of fluoropolymer powders may be used. Polytetrafluoroethylene (PTFE) resin powder is preferred, although powder of ethylene-tetrafluoroethylene copolymers (ETFE), tetrafluoroethylene-hexafluoropropylene copolymers (FEP), ethylene-trifluorochloroethylene copolymers (ECTFE), polyvinylidene fluoride (PVDF), tetrafluoroethylene-perfluoroalkyl vinyl ether copolymers (PFA), and the like, may also be used. Powder having a mean particle size in the range 0.1 to about 300 micrometers can be used in the invention but a preferred mean particle size is in the range 0.1 to about 100 micrometers and, more preferably, in the range 0.5 to about 10 micrometers. Particle size information is usually provided by the manufacturer or supplier of the powder and is determined by conventional sieving or instrumental analytical techniques.

In the present invention, a fluorine-containing compound having hydrophilic groups is first deposited as a coating on the surface of fluoropolymer particles. The fluorine-containing compound having hydrophilic groups may be in a liquid or solid state at normal temperature and includes low-molecular-weight compounds, oligomers, polymers, and the like. The fluorine-containing compounds can also be in a crosslinked state on the surface of the powder particles. The amount of the fluorine-containing compound having hydrophilic groups that is deposited on the powder surface is 1 to 10 wt. percent, and preferably 2 to 6 weight percent, with respect to to the final powder product.

The hydrophilic fluorine-containing compound may be coated on the fluoropolymer particle surfaces using conventional liquid spraying or liquid immersion mixing/coating methods, and the like. Also, chemical methods such as interfacial polymerization techniques and physicochemical methods such as phase separation techniques from aqueous or organic solutions can be used.

The hydrophilic fluorine-containing copolymer used to coat the surfaces of the fluoropolymer powder may be a copolymer of a fluorine-containing ethylenically unsaturated monomer and a non-fluorinated vinyl monomer containing a hydrophilic group. It may be made by copolymerizing the monomers.

Preferably the fluorine-containing monomer of the fluorine-containing copolymer will be a vinyl monomer such as, for example, tetrafluoroethylene, vinyl fluoride, vinylidene fluoride, monochlorotrifluoroethylene, dichlorodifluoroethylene, hexafluoropropylene, and the like.

More preferably, the fluorine-containing vinyl monomer can be described as

CXY = CFZ

wherein Z can be fluorine or hydrogen and X and Y can each be selected from hydrogen, fluorine, chlorine and -CF3.

Other desirable fluorine-containing monomers useful herein include:

$CH_2$ = CR
|
COORf

$CH_2$ = CR
|
OCORf

$CH_2$ = CR
|
O = C - Rf

$CH_2$ = CR
|
O - Rf

$CH_2$ = CR
|
CONHRf

In the above formulae, R is hydrogen, fluorine, a methyl group, an ethyl group, a trifluoroethyl group ($CF_3$), or pentafluoroethyl ($C_2F_5$). Rf is a perfluoroalkyl group with 4 to 21 carbons.

Meanwhile, examples of monomers that contain hydrophilic groups include those that have hydroxyl groups, carboxyl groups, sulfone groups, phosphoric acid groups, amide groups that may be N-substituted, and amino groups that may be N-substituted. Monomers in which an alkylene oxide such as ethylene oxide or propylene oxide has been subjected to an additional reaction with the active hydrogen in these groups are also favorable. Those that yield copolymers containing hydropohilic groups by performing first

copolymerization and then hydrolysis, such as vinyl acetate are also used.

Specific examples of thes hydrophilic monomers include vinyl alcohol, acrylic acid, methacrylic acid, and other such unsaturated carboxylic acids, as well as alkylene oxide adducts of acrylic acid or methacrylic acid, such as those shown below:

$$CH_2 = CR$$
$$COO(C_2H_4O)nH$$

$$CH_2 = CR$$
$$COO(C_3H_6O)nH$$

$$CH_2 = CR$$
$$COO(C_3H_6O)m(CF_2H_4O)nH$$

$$CH_2 = CR$$
$$CONH(CH_2)3NH_2$$

In the above formulae, R is hydrogen or a methyl group and n and m are integers greater than or equal to one and preferably one to twenty.

Both the fluorine-containing monomer and the monomer containing hydrophilic groups may be used singly or in combinations of two or more types. And if needed, other vinyl monomers, such as alkyl esters or acrylic acid or methacrylic acid, esters of trimethylol propane or other such polyhydric alcohol and acrylic acid and methacrylic acid, and the like, can also be used jointly with the above-mentioned fluorine-containing monomer and the monomer containing hydrophilic groups.

The copolymer of vinyl alcohol with the fluorine-containing monomer may be prepared by saponifying a copolymer of vinyl acetate with the fluorine-containing monomer to thereby convert the acetate group contained in the copolymer into the hydroxyl group. In this case, all of the acetate groups contained in the copolymer are not necessarily replaced by the hydroxyl group and the conversion of the acetate groups into the hydroxyl groups may be carried out to the extent needed to provide the copolymer with hydrophilic properties.

The fluorine content of the fluorine-containing hydrophilic copolymer to be used in the present invention may range usually from 2% to 60%, preferably from 10% to 60%, and most preferably 20%-60% on a weight basis. If the fluorine content of the fluorine-containing hydrophilic copolymer becomes too high, on the one hand, the hydrophilic properties of the polymer may be lessened, though the heat resistance becomes better. If the fluorine content becomes too low, on the other hand, adhesion of the fluorine-containing hydrophilic polymer to the fluoropolymer particle may be reduced and the heat resistance may be decreased.

The equivalent weight is the formula weight divided by the number of functional units in the formula and will be generally between 45 and 700, preferably, 60-500 and most preferably, 60-450.

If the equivalent weight is lower than 45, the water solubility of the fluorine-containing hydrophilic copolymer may be too high and the fluorine-containing copolymer will elute away with water; and if the equivalent weight is higher than 700, the hydrophilic properties will be lessened, but the interaction between the copolymer and the fluoropolymer particle will be increased and thus the copolymer will not tend to elute away.

The following Table provides the mole % fluorine monomer units in the copolymer, the fluorine weight % (F-wt %) and the equivalent weight (EqW) for a number of copolymers (where VOH is vinyl alcohol):

| Copolymer | Molar Ratio in Copolymer | Mole % of F-monomer Units in copolymer | F-wt% | Eq-W |
|---|---|---|---|---|
| $(CF_2=CF_2)x/(VOH)y$ | | | | |
| | x=1, y=40 | 2.4 | 4.2 | 45.5 |
| | 1, 30 | 3.2 | 5.5 | 46.4 |
| | 1, 20 | 4.8 | 7.9 | 48.0 |
| | 1, 10 | 9.1 | 14.3 | 53 |
| | 1, 4 | 20 | 27.5 | 68 |
| | 1, 1 | 50 | 53.1 | 143 |
| | 10, 1 | 91 | 72.8 | 1043 |
| $(CF_2=CH_2)x/(VOH)y$ | | | | |
| | x=1, y=40 | 2.4 | 2.1 | 44.6 |
| | 1, 30 | 3.2 | 2.8 | 45.2 |
| | 1, 20 | 4.8 | 4.1 | 46.2 |
| | 1, 10 | 9.1 | 7.5 | 49 |
| | 1, 4 | 20 | - | - |
| | 1, 1 | 50 | 33.6 | 107 |
| | 10, 1 | 91 | 55.6 | 683 |
| $(CFH=CH_2)x/(VOH)y$ | | | | |
| | x=1, y=40 | 2.4 | 1.1 | 44.2 |
| | 1, 30 | 3.2 | 1.4 | 44.6 |
| | 1, 20 | 4.8 | 2.1 | 45.3 |
| | 1, 10 | 9.1 | 4.0 | 47.6 |
| | 1, 4 | 20 | - | - |
| | 1, 1 | 50 | 21.3 | 89 |
| | 10, 1 | 91 | 37.8 | 503 |
| $(CF_2=CFCl)x/(VOH)y$ | | | | |
| | x=1, y-40 | 2.4 | 3.1 | 46.0 |
| | 1, 30 | 3.2 | 4.0 | 46.9 |
| | 1, 20 | 4.8 | 5.8 | 48.9 |
| | 1, 10 | 9.1 | 10.4 | 54.6 |
| | 1, 4 | 20 | - | - |
| | 1, 1 | 50 | 35.8 | 159 |
| | 10, 1 | 91 | 47.2 | 1208 |

| Copolymer | Molar Ratio in Copolymer | Mole % of F-monomer Units in copolymer | F-wt% | Eq-W |
|---|---|---|---|---|
| $(CF_2=CCl_2)x/(VOH)y$ | | | | |
| | x=1, y=40 | 2.4 | 2.0 | 46.5 |
| | 1, 30 | 3.2 | 2.7 | 47.7 |
| | 1, 20 | 4.8 | 3.8 | 50.0 |
| | 1, 10 | 9.1 | 6.7 | 57 |
| | 1, 4 | 20 | - | - |
| | 1, 1 | 50 | 20.8 | 183 |
| | 10, 1 | 91 | 26.3 | 1442 |

The fluoropolymer powder coated with the hydrophilic fluorine-containing copolymer may be prepared, for example, by dissolving the hydrophilic fluorine-containing copolymer in an organic solvent such as, for example, an alcohol, ketone, ester, amide, or hydrocarbon, and immersing the powder in the solution; or by spraying the solution on the particle surfaces, and drying the resulting product. It is also possible for the fluorine-containing monomer and the monomer containing hydrophilic groups to be polymerized on the surfaces of the fluoropolymer particles. The amount of the hydrophilic fluorine-containing copolymer to adhere to the fluoropolymer powder particle surfaces will vary depending on the types of powder used and according to the coating methods and solutions used, but will be sufficient to make the surfaces hydrophilic, usually 1 to 10 weight percent, and preferably 2 to 6 weight percent, with respect to the weight of the resulting final product.

The hydrophilic fluoropolymer particles of the present invention may also be prepared by coating the powder particles with a solution of a copolymer in an organic solvent; such a copolymer being comprised of the fluorine-containing monomer with a monomer having a hydrophobic group convertible into a hydrophilic group, such as vinyl acetate, drying the substrate and converting at least a portion of the hydrophobic groups into the hydrophilic groups.

Other fluorine-containing compounds having hydrophilic groups that are suitable for use in the present invention are surfactants that contain fluorine; some examples of which are given below.

$RfCONHC_2H_4OC(C_2H_4O)nH$ (11)

$RfSO2NH_2H_4O(C_2H_4O)nH$ (12)

$RfC_2H_4OH$ (13)

$RfCOOH$ (14)

$RfC_2H_4N(CH_3)_2$ (15)

In the general formulas above, Rf is a perfluoro higher alkyl group with a carbon number of eight or more, preferably 12 to 30; and n is an integer greater than or equal to one, preferably an integer of two to five.

These fluorine-containing surfactants can be in the form of a liquid or a solid at normal temperatures.

To deposit these fluorine-containing surfactants on the surface of the powder particles, the fluorine-containing surfactant can be dissolved in a halogenated hydrocarbon, ethyl acetate, acetone, or some other organic solvent, to form a solution with which the particles can be coated by immersion or other suitable method, after which the solvent is removed. The concentration of the fluorine-containing surfactant in the solution should be 1 to 10 weight percent, preferably 2 to 5 weight percent.

The fluoropolymer particles thus prepared have markedly enhanced water-wettability while retaining their other excellent intrinsic properties. The hydrophilic fluoropolymer particles of the invention can be easily dispersed in water and aqueous solutions, and can be handled in the same manner as conventional hydrophilic particles. The hydrophilic particles may be used as additives in water-based paints, metal-plating bath additives, lubricants, and other such applications.

The hydrophilic fluoropolymer particles thus obtained can also have metallic coatings, for example,

metals, metal alloys, or metal compounds, on their surfaces. The excellent wettability and dispersability of the hydrophilic particles in aqueous liquids make possible the deposition of metallic coatings on their surfaces from conventional aqueous electroless-chemical or electro-chemical metal-plating baths by standard powder plating methods.

Gold, silver, platinum, rhodium, palladium, nickel, cobalt, tungsten, copper, zinc, iron, and their alloys, are examples of some of the metals and alloys which can be plated on the hydrophilic particle surfaces.

In some cases predeposition of a noble metal, such as palladium, platinum, or silver, will facilitate plating and improve adhesion of other plated metals. For example, sequentially immersing the powder in an aqueous solution of tin(II) chloride, a water rinse, an aqueous solution of palladium chloride, and a final water rinse is a well known pretreatment technique for chemical plating.

For difficult to plate materials such as platinum and gold, and their alloys, a method frequently used to facilitate their plating and provide good adhesion is to deposit a first layer of nickel, copper, cobalt, or some other easily plated metal on the surface of the particles on which the more difficult material is subsequently plated.

Platinum ions are readily reduced in many plating solutions and, consequently, it is difficult to selectively plate platinum. However, when hydrazine hydrochloride is used as a reducing agent the stability of the plating solution is greatly improved and platinum can be selectively deposited on the article to be plated. Furthermore, when hydrazine hydrochloride is used as a reducing agent platinum alloys such as platinum-iridium or platinum-rhodium can be readily deposited. A typical platinum-plating solution is shown below.

| | |
|---|---|
| Chloroplatinic acid | 0.003 to 0.007 mol/L |
| Hydrazine hydrochloride | 0.1 to 0.3 mol/L |
| pH | 3 to 4 |
| Temperature | 30 to 40°C |

The metallic coatings may be applied as single or multiple layers of metals, or their alloys, in the thickness range 10 Angstroms to 5 micrometers, preferably in the range 500 Angstroms to 1 micrometer. The deposited metals on the surface of the hydrophilic particles may also be converted into metallic compounds, for example, oxides, sulfides, halides, nitrides, carbides, or the like, by well known conventional chemical reactions.

The metals deposited on the surface of the hydrophilic particles strongly adhere to the hydrophilic fluorine-containing compound coated on the fluoropolymer particle surfaces, even to the irregular portions of the particle surfaces, and provide a metallic coating with remarkable durability. Also, since the hydrophilic coating on the fluoropolymer particle surface is a fluorine-containing compound the characteristics of the fluoropolymer powder are not impaired.

## TEST DESCRIPTIONS

### Wettability Test

Five parts by weight of powder to be tested was added to 100 parts by weight of water and agitated with a homogenizer. Dispersion of the powder into the water was observed and evaluated using the following criteria.

A: The powder was uniformly dispersed in the water.

B: The powder coagulated in the water.

C: The powder separated into a portion that was wetted by water and a portion that was not wetted by water.

D: The powder was not wetted by water and floated on the surface of the water or adhered to the side of the vessel.

### Hydrophilic Coating Adhesion Test

Test powder is ground in a mortar, after which it is subjected to the wettability test.

### Acid Resistance Test

Test powder is soaked in 3N hydrochloric acid for 24 hours at room temperature, after which it is subjected to the wettability test.

Alkali Resistance Test

Test powder is soaked in 1N sodium hydroxide solution for 24 hours at room temperature, after which it is subjected to the wettability test.

Paint Additive Test

Except as noted, 20 parts by weight of test powder was added to 100 parts by weight of a commercial alkali paint. Also added to the paint with the test powder of the Reference Example were 2 parts by weight of FC-170C fluorosurfactant (made by Sumitomo 3M Co.). The mixtures were agitated with a homogenizer to produce a test paint.

The paint was applied to Type SUS 304 stainless steel test panels, and the appearance of the paint on the panels was evaluated.

Weathering Test

Painted stainless steel test panels (as described in the paint additive test) were exposed to the outdoor environment for 60 days, after which the appearance of the paint was evaluated.

Dynamic Friction Test

The dynamic coefficient of friction of the paint on stainless steel test panels was measured using a Suzuki-type friction and abrasion tester.

| Test Conditions: | |
|---|---|
| Companion material:<br>Load:<br>Speed: | SUS 304 Stainless Steel<br>10 Kilograms<br>1 meter per second |

Example 1

A fluoropolymer powder of low molecular weight polytetrafluoroethylene particles, "Lubron L-2" (TM), manufactured by Daikin Industries, Ltd., was used. The powder had a bulk density of about 0.35 g/cc and a mean particle diameter of about 5 micrometers.

The Lubron L-2 (TM) polytetrafluoroethylene powder was mixed with 0.1 % methyl alcohol solution of a tetrafluoroethylene/vinyl alcohol copolymer (fluorine content: 27 wt %) in a powder to liquid weight ratio of 100 to 0.5. The mixture was spray-dried in an 80 °C atmosphere, thereby producing fluoropolymer powder particles coated with a tetrafluoroethylene/vinyl alcohol copolymer.

The powder was tested, and the results summarized in Table 1.

Example 2

Lubron L-2 (TM) polytetrafluoroethylene powder and a 0.2 % isopropyl alcohol solution of fluorine-containing surfactant ("Fluorade RC-170C" [TM], a perfluoroalkyl polyoxyethylene ethanol made by Sumitomo 3M Co.) were mixed in a powder to liquid ratio of 100 to 1. The mixture was spray-dried in a 100 °C atmosphere, thereby producing fluoropolymer powder particles coated with a fluorine-containing surfactant.

The powder was tested, and the results summarized in Table 1.

Comparative Example 1

Lubron L-2 (TM) polytetrafluoroethylene powder which had been pre-treated with an ammonia solution of metallic sodium, and a polyamidoimide resin paint were mixed in a powder to paint ratio of 100 to 40.

The mixture was spray-dried in a 150 °C atmosphere, thereby producing fluoropolymer powder particles coated with a polyamidoimide resin.

The powder was tested, and the results summarized in Table 1.

Comparative Example 2

Lubron L-2 (TM) polytetrafluoroethylene powder which had been pre-treated with an ammonia solution of metallic sodium was sequentially immersed in an aqueous solution of tin chloride, a water rinse, an acidic aqueous solution of palladium chloride, a water rinse, and an electroless nickel-plating bath, thereby producing fluoropolymer powder particles coated with nickel metal.

The powder was tested, and the results summarized in Table 1.

Comparative Example 3

Lubron L-2 (TM) polytetrafluoroethylene powder which had been pre-treated with an ammonia solution of metallic sodium was immersed in an isopropyl alcohol solution of silicon isopropoxide ( $Si\{OCH[CH_3]_2\}_4$ ), thereby producing fluoropolymer powder particles coated with silicon oxide ($SiO_2$).

The powder was tested, and the results summarized in Table 1.

Reference Example

Lubron L-2 (TM) polytetrafluoroethylene powder that had not undergone any surface treatment whatsoever was used.

The powder was tested, and the results summarized in Table 1.

Table 1

| Test | Example 1 | Example 2 | Comparative Example 1 | Comparative Example 2 | Comparative Example 3 | Reference Example |
|---|---|---|---|---|---|---|
| Wettability | A | A | B | B | A | D |
| Adhesion | A | A | C | D | C | - |
| Acid Resistance | A | A | C | D | C | - |
| Alkali Resistance | A | A | C | C | D | - |
| Paint Additive | GOOD | GOOD | GOOD | POOR DISPERSION | GOOD | PIN HOLES |
| Weathering | GOOD | GOOD | BLISTERING | CRACKS | FADING | BLISTERING |
| Friction* | 0.18 | 0.21 | 0.23 | 0.45 | 0.30 | 0.25 |

* Values are the Dynamic Coefficients of Friction

It can be seen from the data in Table 1 that the hydrophilic particles of the invention have excellent water-wettability and have retained the excellent acid and alkali resistance, weatherability, and low friction characteristics associated with fluoropolymer particles.

Additional examples illustrate another embodiment of the invention wherein the hydrophilic fluoropolymer particles have metallic coatings.

Example 3

Lubron L-2 (TM) polytetrafluoroethylene powder coated with a hydrophilic tetrafluoroethylene/vinyl alcohol copolymer as described in Example 1 was introduced into an aqueous solution containing 2.5 mmol/L of palladium chloride. The solution was stirred and ultrasonically agitated, and the palladium chloride was uniformly deposited on the surface of the powder particles, after which an activating treatment was conducted. The amount of the palladium colloid was set at 0.03 mmol per gram of coated fluoropolymer powder.

The powder was introduced into a stirred electroless copper-plating bath having the following composition: 0.015 mol/L copper(II) sulfate pentahydrate, 0.04 mol/L sodium potassium tartrate tetrahydrate, 0.12 mol/L sodium hydroxide, and 0.4 mol/L formaldehyde. After plating, the copper-plated fine powder was rinsed and dried. The particle size was approximately 6 micrometers, and the polytetrafluoroethylene to

copper ratio was approximately 4 to 1.

The copper-plated powder was heat treated in air for 3 hours at 250 °C, thus converting the copper to copper oxide for use as an ozone decomposition catalyst. The powder was tested as an ozone decomposition catalyst as follows:

Into a glass tube was packed 0.1 g of the copper oxide coated fluoropolymer particles. Air containing 250 ppm ozone was passed through the tube at rate of 160 cc/min at a temperature of about 30 °C. for more than six hours. Ozone concentrations in the air were measured before and after passage through the glass tube to determine the ozone decomposition rate.

An ozone decomposition rate greater than 95 percent was maintained for more than six hours.

Example 4

Lubron L-2 (TM) polytetrafluoroethylene powder coated with a hydrophilic tetrafluoroethylene/vinyl alcohol copolymer as described in Example 1 was introduced into a stirred solution of tin(II) chloride, after which it was rinsed with water, introduced into a solution of 0.005 mol/L $PdCl_2$, and rinsed again.. The powder was then introduced into a stirred electroless silver-plating bath having the following composition: 0.07 mol/L silver nitrate, aqueous ammonia, and 0.2 mol/L sodium potassium tartrate.

The silver-plated powder was tested as a filler material for sterilization filters by challenging it with solutions containing coliform bacteria, and then comparing its performance to filters not having silver present. The powder was found to have satisfactory sterilization action and the silver-plating demonstrated good durability and adhesion to the particle as it did not separate from the particles after being used for a long period of time under conditions of high-pressure water flow.

Example 5

Lubron 1-2 (TM) polytetrafluoroethylene powder coated with a hydrophilic tetrafluoroethylene/vinyl alcohol copolymer as described in Example 1 was activated in a solution of 0.08 mol/L tin(II) chloride as described in example 4. The powder was then introduced into a stirred solder-plating bath having the following composition: aqueous ammonia containing 0.34 mol/L $Na^3$ citrate $2H_2O$, 0.08 mol/L $Na^2$EDTA $2H_2O$, 0.2 mol/L $Na_3$ $H_2O$, 0.4 mol/L SnCl $2H_2O$, 0.04 mol/L $PdCl_2O$, and 0.04 mol/L $TiCl_3O$, thereby producing a solder-plated fluoropolymer powder.

The solder-plated powder provided good connections when used to mount integrated circuits, capacitor chips, diode chips, resistor chips, and other electronic parts using a CCB (Controlled Collapse Bonding) soldering technique. The CCB soldered connections were made at a temperature of 250 °C over a period of two minutes.

The connections maintained good conductivity and showed little deterioration resulting from 10 temperature cycles made according to MIL-STD-883C. Each temperature cycle consists of 4 steps: step 1 is a 10 minute period in a -65 °C chamber; step 2 is a period not exceeding 5 minutes at room temperature; step 3 is a 10 minute period in 150 °C chamber, step 4 is a period not exceeding 5 minutes at room temperature.

In addition, the solder connections did not have a neck, or reduced cross-section portion, often found in conventional solder joints. Instead, the fluoropolymer core of the solder-coated particle resists constriction of the solder during solidification and the solder connections assumed drum-like shapes, which are advantageous from a standpoint of stress, thus increasing their reliability.

Example 6

Lubron L-2 (TM) polytetrafluoroethylene powder coated with a hydrophilic tetrafluoroethylene/vinyl alcohol copolymer as described in Example 1 was first plated with copper, and then additionally plated with nickel, thereby producing an electrically-conductive powder.

The powder was compacted in a vessel at 1 $Kg/cm^2$ pressure to form a shape having a top and bottom area of 1 $cm^2$ and a height of 1 cm, and the electrical resistance of the compacted powder was measured. The compacted powder had a volume resistivity of 0.5 ohm-cm.

Example 7

Lubron 1-2 (TM) polytetrafluoroethylene powder coated with a hydrophilic tetrafluoroethylene/vinyl alcohol copolymer as described in Example 1 was plated with hard nickel. A sheet was formed from the

powder by heat-molding, thereby producing a sheet having alternating regions of nickel and polytetrafluoroethylene on its surfaces.

The sheet was tested as a friction material and was found to have a higher coefficient of dynamic friction, but greater wear resistance than a sheet of uncoated polytetrafluoroethylene.

**Claims**

1. Hydrophilic fluoropolymer particles comprising fluoropolymer particles having on their surfaces a hydrophilic coating of a hydrophilic fluorine-containing copolymer comprised of (i) units of a fluorine-containing monomer and (ii) units of a non-fluorinated vinyl monomer containing a hydrophilic functional group; wherein the amount of the copolymer present is sufficient to impart increased hydrophilicity to the fluoropolymer particles.

2. The hydrophilic fluoropolymer particles of Claim 1, wherein the hydrophilic coating is a fluorine-containing surfactant comprising a perfluoro higher alkyl group with a carbon number of eight or more.

3. The hydrophilic fluoropolymer particles of Claim 1, said particles additionally having a metallic coating on the fluorine-containing copolymer on the surface of said fluoropolymer particles.

4. The hydrophilic fluoropolymer particles of Claim 2, said particles additionally having a metallic coating on the fluorine-containing surfactant on the surface of said fluoropolymer particles.

5. The hydrophilic fluoropolymer particles of Claim 3 or Claim 4, wherein the metallic coating is selected from the group consisting of gold, silver, palladium, platinum, rhodium, nickel, cobalt, iron, tungsten, copper, zinc, cadmium, tin, and their alloys.

6. The hydrophilic fluoropolymer particles of Claim 5, wherein the metallic coating is in the form of a metal oxide, metal nitride, or metal carbide.

7. The hydrophilic fluoropolymer particles of Claim 1, 2, 3, 4, 5, or 6, wherein the fluoropolymer particles are polytetrafluoroethylene particles.

European Patent Office

# EUROPEAN SEARCH REPORT

Application Number

EP 92 11 2453

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | EP-A-0 393 480 (DAIKIN INDUSTRIES, LTD.)<br>* claim 1 *<br>* page 4, line 34 - line 41 *<br>* page 5, line 7 - line 44 *<br>--- | 1,2 | C08J3/12<br>C08L27/12 |
| A | EP-A-0 360 575 (JAPAN SYNTHETIC RUBBER CO. LTD.)<br>* claims 1,10-12 *<br>* page 3, line 19 - line 22 *<br>* page 3, line 48 - line 59 *<br>--- | 1 | |
| A | US-A-4 859 745 (CARL W.P. ET AL)<br>* claims 1,9,10 *<br>* column 3, line 14 - line 19 *<br>* column 5, line 36 - line 41 *<br>--- | 1 | |
| A | DATABASE WPIL<br>Derwent Publications Ltd., London, GB;<br>AN 89104185[14]<br>& JP-A-1 051 454 (TOKYO SILICONE KK) 27 February 1989<br>* abstract *<br>----- | 1 | TECHNICAL FIELDS SEARCHED (Int. Cl.5 )<br>C08J<br>C08L<br>C08F<br>C08K |

The present search report has been drawn up for all claims

| Place of search | Date of completion of the search | Examiner |
|---|---|---|
| THE HAGUE | 05 NOVEMBER 1992 | NIAOUNAKIS M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document